# FASCICULE DE BREVET EUROPEEN

(11) **EP 2 936 783 B1**
(45) Date de publication et mention de la délivrance du brevet: **19.06.2019**
(21) Numéro de dépôt: 13820821.0
(22) Date de dépôt: 17.12.2013
(51) Int. Cl.: H04L 29/08, H04L 29/06, H04L 12/701, H04L 12/741

(54) **TECHNIQUE DE COMMUNICATION DANS UN RÉSEAU DE COMMUNICATION CENTRÉ SUR LES INFORMATIONS**
KOMMUNIKATIONSTECHNIK IN EINEM INHALTZENTRIERTEN NETZWERK
COMMUNICATION TECHNIQUE IN A CONTENT CENTRIC NETWORK

(30) Priorité: 18.12.2012 FR 1262260
(43) Date de publication de la demande: 28.10.2015
(73) Titulaire: Orange, 75015 Paris (FR)
(72) Inventeur: YOU, Wei, F-22300 Lannion (FR); MATHIEU, Bertrand, F-22560 Pleumeur-bodou (FR)
(86) Numéro de dépôt international: PCT/FR2013/053143
(87) Numéro de publication internationale: WO 2014/096687

(56) Documents cités:
- EP-A1- 2 120 402
- EP-A1- 2 214 357
- EP-A1- 2 323 346
- BLEFARI MELAZZI N ET AL: "Route discovery and caching: A way to improve the scalability of Information-Centric Networking", GLOBAL COMMUNICATIONS CONFERENCE (GLOBECOM), 2012 IEEE, IEEE, 3 décembre 2012 (2012-12-03), pages 2701-2707, XP032375082, DOI: 10.1109/GLOCOM.2012.6503525 ISBN: 978-1-4673-0920-2
- MOHAMED DIALLO ET AL: "Leveraging Caching for Internet-Scale Content-Based Publish/Subscribe Networks", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 juin 2011 (2011-06-05), pages 1-5, XP031908428, DOI: 10.1109/ICC.2011.5962666 ISBN: 978-1-61284-232-5
- ZHE LI ET AL: "Time-Shifted TV in Content Centric Networks: The Case for Cooperative In-Network Caching", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 juin 2011 (2011-06-05), pages 1-6, XP031909106, DOI: 10.1109/ICC.2011.5963380 ISBN: 978-1-61284-232-5
- YANG LI ET AL: "A chunk caching location and searching scheme in Content Centric Networking", COMMUNICATIONS (ICC), 2012 IEEE INTERNATIONAL CONFERENCE ON, IEEE, 10 juin 2012 (2012-06-10), pages 2655-2659, XP032273788, DOI: 10.1109/ICC.2012.6363958 ISBN: 978-1-4577-2052-9
- MARICA AMADEO ET AL: "CHANET: A content-centric architecture for IEEE 802.11 MANETs", NETWORK OF THE FUTURE (NOF), 2011 INTERNATIONAL CONFERENCE ON THE, IEEE, 28 novembre 2011 (2011-11-28), pages 122-127, XP032093085, DOI: 10.1109/NOF.2011.6126671 ISBN: 978-1-4577-1605-8
- AIPING YI ET AL: "An Ad-hoc Distributed Reasoning Scheme for Content Centric Networking", CLOUD AND GREEN COMPUTING (CGC), 2012 SECOND INTERNATIONAL CONFERENCE ON, IEEE, 1 novembre 2012 (2012-11-01), pages 9-16, XP032329052, DOI: 10.1109/CGC.2012.100 ISBN: 978-1-4673-3027-5
- SARA OUESLATI ET AL: "Flow-aware traffic control for a content-centric network", INFOCOM, 2012 PROCEEDINGS IEEE, IEEE, 25 mars 2012 (2012-03-25), pages 2417-2425, XP032178992, DOI: 10.1109/INFCOM.2012.6195631 ISBN: 978-1-4673-0773-4
- SHUAI DING ET AL: "Parallelizing FIB Lookup in Content Centric Networking", NETWORKING AND DISTRIBUTED COMPUTING (ICNDC), 2012 THIRD INTERNATIONAL CONFERENCE ON, IEEE, 21 octobre 2012 (2012-10-21), pages 6-10, XP032293356, DOI: 10.1109/ICNDC.2012.10 ISBN: 978-1-4673-2858-6

## Description

L'invention concerne une technique de communication dans un réseau de communication centré sur les informations, mettant en oeuvre un acheminement par nom.

L'article de Van Jacobson et al, intitulé « Networking Named Content » et publié en 2009 dans les actes de la conférence CoNEXT'09 présente une nouvelle architecture centrée sur les contenus, appelée « Content-Centric Networking » en anglais. Cette architecture propose de changer le modèle de communication actuel basé sur un adressage d'équipement dans le réseau par un nouveau modèle de communication basé sur un adressage par nom des contenus. Plus généralement, une nouvelle architecture ICN pour « Information Centric Networking » est en cours de définition, pour permettre un adressage par nom pour les flots acheminés dans ce type de réseau.

Un flot peut être fourni pour différentes applications, temps réel ou non, et est identifié dans le réseau de communication par un nom ou identifiant de flot. Un flot est composé de segments de données. Un segment de données est, quant à lui, identifié par un numéro de segment et l'identifiant de flot.

Plus précisément, pour obtenir un segment de données d'un flot, une entité cliente transmet une demande relative à ce segment de données, appelée « Interest Packet ». Sur réception de cette demande, un dispositif d'acheminement vérifie s'il dispose du segment de données recherché dans une mémoire cache ou magasin de contenus. Si tel est le cas, il le transmet alors vers l'interface par l'intermédiaire de laquelle la demande a été reçue, à destination ainsi de l'entité cliente, le cas échéant par l'intermédiaire d'autres dispositifs d'acheminement. S'il ne dispose pas du segment de données recherché, il vérifie dans une table de demandes pendantes PIT, pour « Pending Interest Table » en anglais, s'il a déjà transmis une demande relative au même segment de données. Si tel n'est pas le cas, il mémorise dans la table de demandes pendantes PIT l'identifiant du segment de données recherché en association avec un identifiant de l'interface par l'intermédiaire de laquelle la demande relative au segment de données recherché a été reçue. Il détermine ensuite à partir d'une table d'acheminement FIB, pour « Forwarding Information Base », et en fonction de l'identifiant de flot une interface par l'intermédiaire de laquelle il transmet la demande. Dans le cas contraire, c'est-à-dire lorsque la table de demandes pendantes comprend déjà l'identifiant du segment de données recherché, il ne transmet pas la demande reçue mais associe dans la table de demandes pendantes PIT à l'identifiant du segment de données recherché un identifiant de l'interface par l'intermédiaire de laquelle la demande a été reçue. Lorsque le dispositif d'acheminement reçoit le segment de données recherché, il le retransmet sur l'ensemble des interfaces par l'intermédiaire desquelles des demandes relatives à ce segment de données ont été reçues, à destination finale de l'ensemble des entités clientes l'ayant demandé. Le dispositif d'acheminement peut également le mémoriser dans sa mémoire cache, afin de distribuer plus rapidement le segment de données en réponse à une demande ultérieure d'une autre entité cliente. Chaque dispositif d'acheminement met en oeuvre ses propres règles de gestion de sa mémoire cache. Les articles suivants décrivent des améliorations dans l'emploi des tables PIT et FIB et/ ou l'utilisation de tables supplémentaires:
- BLEFARI MELAZZI N ET AL: "Route discovery and caching: A way to improve the scalability of Information-Centric Networking",GLOBAL COMMUNICATIONS CONFERENCE (GLOBECOM), 2012 IEEE, IEEE, 3 décembre 2012, pages 2701-2707, DOI: 10.1109/GLOCOM.2012.6503525, ISBN: 978-1-4673-0920-2;
MOHAMED DIALLO ET AL: "Leveraging Caching for Internet-Scale Content-Based Publish/Subscribe Networks",ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 juin 2011, pages 1-5, DOI: 10.1109/ ICC.2011.5962666, ISBN: 978-1-61284-232-5
ZHE LI ET AL: "Time-Shifted TV in Content Centric Networks: The Case for Coopérative In-Network Caching",ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 juin 2011, pages 1-6, DOI: 10.1109/ ICC.2011.5963380, ISBN: 978-1-61284-232-5
YANG LI ET AL: "A chunk caching location and searching scheme in Content Centric Networking",COMMUNICATIONS (ICC), 2012 IEEE INTERNATIONAL CONFERENCE ON, IEEE, 10 juin 2012, pages 2655-2659, DOI: 10.1109/ICC.2012.6363958,ISBN: 978-1-4577-2052-9
MARICA AMADEO ET AL: "CHANET: A content-centric architecture for IEEE 802.11 MANETs",NETWORK OF THE FUTURE (NOF), 2011 INTERNATIONAL CONFERENCE ON THE, IEEE, 28 novembre 2011, pages 122-127, DOI: 10.1109/NOF.2011.6126671,ISBN: 978-1-4577-1605-8.

Un des buts de l'invention est de remédier à des insuffisances/inconvénients de l'état de la technique et/ou d'y apporter des améliorations. L'invention est définie par les revendications indépendantes de procédé 1, de dispositif 7, de réseau 9, de programme 10 et de support d'enregistrement 11.

Selon un premier aspect, l'invention a pour objet un procédé de communication mis en oeuvre par un dispositif d'acheminement dans un réseau de communication mettant en oeuvre un acheminement par nom, ledit procédé comprenant les étapes suivantes mises en oeuvre pour traiter une demande relative à un segment de données d'un flot donné, ladite demande étant à acheminer par l'intermédiaire d'une interface du dispositif d' acheminement:
- une étape de mémorisation d'au moins un identifiant d'une interface par l'intermédiaire de laquelle au moins un autre segment de données dudit flot donné a été acheminé, ladite étape de mémorisation étant mise en oeuvre préalablement lors de l'acheminement dudit autre segment de données;
- une première étape d'obtention de l'au moins un identifiant d'une interface mémorisé;
- une première étape d'acheminement de ladite demande par l'intermédiaire de ladite au moins une interface obtenue.

Des applications transmettent des segments de données relatifs à un flot. Il s'agit par exemple d'applications telles que des services de diffusion de contenus temps réel, à la demande ou bien encore « Live ». Il peut également s'agir d'applications de téléphonie. Aucune limitation n'est attachée au type d'application.

De tels segments de données peuvent être des objets ou bien des morceaux d'objet ou bien encore des paquets.

Le réseau de communication est un réseau centré sur les contenus ou informations. Il met ainsi en oeuvre un acheminement par nom et agrège des demandes relatives à un segment de données d'un flot. Les demandes de segment de données émises par une ou des entités clientes sont reçues en provenance de dispositifs d'acheminement reliés à cette ou ces entités clientes et transmises vers d'autres dispositifs d'acheminement vers un équipement disposant du segment de données recherché. Les segments de données sont quant à eux reçus de cet équipement par l'intermédiaire de dispositifs d'acheminement et retransmis vers la ou les entités clientes requérantes par l'intermédiaire de dispositifs d'acheminement si nécessaire

Une demande ou requête relative à un segment de données est dite à acheminer, lorsque la table des demandes pendantes ne comprend pas d'identifiant du segment de données, c'est-à-dire qu'aucune demande n'est en cours ou pendante pour ce segment de données.

Ainsi, grâce à l'invention, le procédé de communication permet à un dispositif d'acheminement de solliciter d'autres dispositifs d'acheminement susceptibles de disposer du segment de données recherché dans leur magasin de contenus ou mémoire cache. Un tel autre dispositif d'acheminement est susceptible de disposer de ce segment de données dans son magasin de contenus parce qu'il a demandé précédemment au dispositif considéré ce segment de données ou un autre segment de données de ce flot et qu'il l'a reçu de ce dernier. Ceci permet de diminuer le temps nécessaire à l'acheminement du segment de données.

Les différents modes ou caractéristiques de réalisation mentionnés ci-après peuvent être ajoutés indépendamment ou en combinaison les uns avec les autres, aux étapes du procédé de communication tel défini précédemment.

Selon une caractéristique particulière, un flot étant rattaché à un domaine, le procédé comprend une deuxième étape d'obtention d'un identifiant d'une autre interface par l'intermédiaire de laquelle au moins un autre segment de données d'un flot rattaché audit domaine a été reçu et une deuxième étape d'acheminement de la demande par l'intermédiaire de ladite autre interface.

Il est ainsi possible de solliciter d'autres dispositifs d'acheminement ayant déjà fourni des segments de données pour ce domaine. Ceci permet de mieux cibler les dispositifs d'acheminement à solliciter. Ceci évite également de mettre en oeuvre des mécanismes de publication dans le réseau relatifs à la localisation des flots.

Dans un premier mode de réalisation particulier, les deuxièmes étapes d'obtention et d'acheminement sont exécutées parallèlement aux premières étapes d'obtention et d'acheminement.

Dans un deuxième mode de réalisation particulier, les deuxièmes étapes d'obtention et d'acheminement sont exécutées lorsque le segment de données n'a pas été reçu en réponse à la première étape d'acheminement.

Selon une caractéristique particulière, l'interface par l'intermédiaire de laquelle le segment de données a été acheminé est mémorisée en association avec un identifiant dudit flot.

Le procédé exploite ainsi les informations mémorisées dans la table des demandes pendantes et utilisées pour acheminer un segment de données pour construire dynamiquement une table d'acheminement par flot, reflétant la localisation des segments de données du flot dans des dispositifs d'acheminement proches du dispositif d'acheminement concerné dans le réseau.

Selon une autre caractéristique particulière, un identifiant du segment de données comprenant une information relative à un nom de domaine, l'interface par l'intermédiaire de laquelle est reçu le segment de données est mémorisée en association avec l'information relative à un nom de domaine.

Le procédé exploite ainsi les informations associées à la réception d'un segment de données pour construire dynamiquement une table d'acheminement par domaine, reflétant la localisation des flots dans le réseau.

Selon un deuxième aspect, l'invention concerne également un dispositif d'acheminement dans un réseau de communication mettant en oeuvre un acheminement par nom, comprenant les moyens suivants, activés pour traiter une demande relative à un segment de données d'un flot donné, ladite demande étant à acheminer sur un lien du dispositif d' acheminement:
- une table d'acheminement par flot, agencée pour mémoriser au moins un identifiant d'une interface par l'intermédiaire de laquelle un autre segment de données du flot a été acheminé lors du traitement d'une demande antérieure relative audit autre segment de données en association avec un identifiant du flot, la mémorisation étant mise en oeuvre préalablement lors de l'acheminement dudit autre segment de données;
- un module d'obtention dudit au moins un identifiant d'une interface;
- un module d'acheminement (100) de ladite demande par l'intermédiaire de ladite au moins une interface obtenue.

Les avantages énoncés pour le procédé selon le premier aspect sont transposables directement au dispositif d'acheminement.

Dans un mode de réalisation particulier, le dispositif d'acheminement comprend en outre un module d'obtention d'un identifiant d'une autre interface, un flot étant rattaché à un domaine, au moins un autre segment de données d'un flot rattaché audit domaine ayant été reçu par l'intermédiaire de ladite autre interface.

Selon un troisième aspect, l'invention concerne en outre un réseau de communication, comprenant un dispositif d'acheminement tel que décrit précédemment.

Les avantages énoncés pour le procédé selon le premier aspect sont transposables directement au réseau de communication.

Selon un quatrième aspect, l'invention concerne un programme pour un dispositif d'acheminement, comprenant des instructions de code de programme destinées à commander l'exécution des étapes du procédé précédemment décrit, lorsque ledit programme est exécuté par ledit dispositif et un support d'enregistrement lisible par un dispositif d'acheminement sur lequel est enregistré un programme pour un dispositif d'acheminement.

Les avantages énoncés pour le procédé selon le premier aspect sont transposables directement au programme pour un dispositif d'acheminement et au support d'enregistrement.

L'invention sera mieux comprise à l'aide de la description suivante de modes de réalisation particuliers du procédé de l'invention, en référence aux dessins annexés sur lesquels :
- la figure 1 représente un réseau de communication centré sur l'information ;
- les figures 2a et 2b représentent des étapes du procédé selon un mode de particulier de réalisation de l'invention ;
- les figures 3a-3f représentent des tables utilisées par un dispositif d'acheminement pour la mise en oeuvre du procédé dans un exemple illustratif ;
- la figure 4 représente un dispositif d'acheminement selon un mode particulier de l'invention.

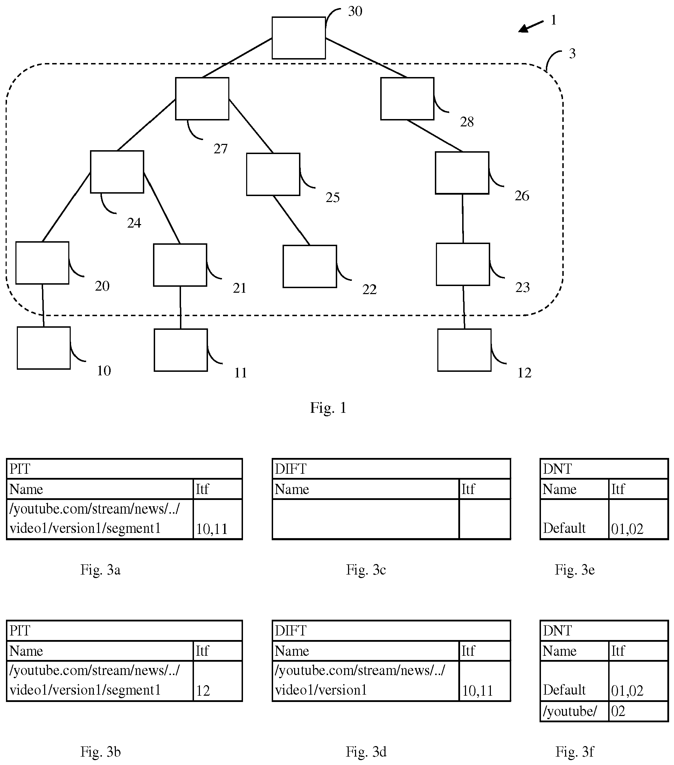

La figure 1 représente un réseau de communication 1 permettant à des entités clientes 10, 11, 12 d'accéder à différentes applications comme la télévision, la vidéo à la demande, l'Internet. Chaque entité cliente 10, 11, 12 est reliée à un réseau d'accès 3. Ce dernier permet aux entités clientes d'accéder aux applications mises en oeuvre par des serveurs, dont un d'entre eux, le serveur 30, est représenté sur la figure 1.

Lorsqu'une entité cliente 10-12 accède à une application donnée mise en oeuvre par le serveur 30, des segments de données relatifs à cette application donnée sont échangés du serveur 30 vers l'entité cliente 10-12. De tels segments de données peuvent être des objets ou bien des morceaux d'objet ou bien encore des paquets.

Il peut s'agir d'une navigation sur un site Web comprenant des segments de données. Il peut également s'agir d'une application de diffusion de contenus, par exemple dans une architecture de type CDN, pour « Content Delivery Network ».

On se place par la suite dans le cas particulier où le réseau de communication 1 est centré sur l'information ICN, pour « Information-Centric Networking ». A titre d'exemple non limitatif, le réseau de communication met en oeuvre les mécanismes d'adressage par nom, tels que décrits dans l'article Van Jacobson et al., intitulé « Networking Named Content », mentionné précédemment. Un tel réseau de communication est également appelé réseau centré sur les contenus CCN, pour « Content Centric Network ». Tel que représenté sur la figure 1, les dispositifs sont organisés sous la forme d'un arbre. Un flot est rattaché dans l'organisation du réseau à un domaine. A titre d'exemple non limitatif, un identifiant de flot Id_F est organisé de la façon suivante :
- un préfixe ou information relative à un nom de domaine, correspondant à un nom acheminable ou routable, par exemple « youtube.com »,
- un nom dans l'organisation, par exemple « stream/news/../ video1/version1».

Un segment de données appartenant à un flot est identifié par l'identifiant du flot et une information relative au numéro de segment.

Selon cet exemple, le segment de données est identifié «/youtube.com/stream/news/../video1/version1/segment1».

Plus précisément, une entité cliente 10 transmet une ou plusieurs demandes relatives à des segments de données. Dans le cas particulier où le serveur 30 dispose de ces segments de données, ce dernier les transmet à destination de l'entité cliente 10. Les segments de données transitent alors par l'intermédiaire du réseau d'accès 3 à destination de l'entité cliente.

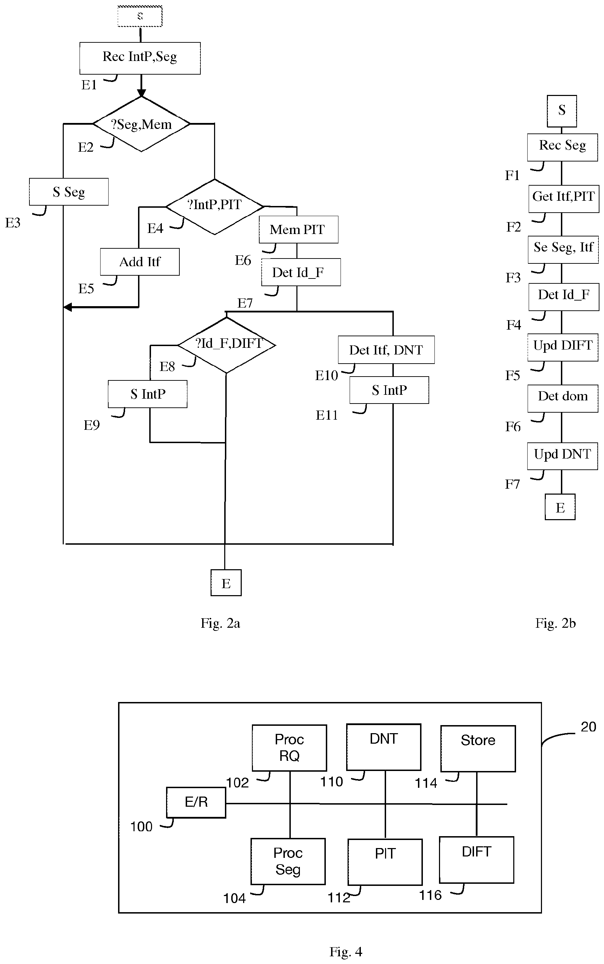

Le réseau d'accès 3 comprend des dispositifs d'acheminement 20-28. Ces dispositifs d'acheminement 20-28, dont l'un d'entre eux le dispositif d'acheminement 20 est représenté à la figure 4, comprennent notamment dans ce type de réseau de communication trois structures de données :
- une première table 110, appelée table d'acheminement par domaine DNT, pour « Domain Name Table », agencée pour mémoriser des données d'acheminement des demandes relatives à des segments de données, plus précisément une liste d'identifiants d'interface en association avec un préfixe ;
- une deuxième table 112, appelée table des demandes pendantes PIT, pour « Pending Interest Table », agencée pour mémoriser une liste d'interfaces par l'intermédiaire desquelles une ou des demandes relatives à un segment de données d'un flot ont été reçues, tant que ce segment de données n'a pas été reçu en réponse (la demande étant alors pendante) ;
- des moyens de mémorisation 114 ou mémoire cache, également appelés magasin de contenus ou « Content Store », agencés pour mémoriser des segments de données ;
- une troisième table 116, appelée deuxième table d'acheminement par flot DIFT, pour « Dynamic Interest Forwarding Table », agencée pour mémoriser des données d'acheminement des demandes relatives à des segments de données en fonction du flot, plus précisément au moins un identifiant d'une interface par l'intermédiaire de laquelle un segment de données de ce flot a été acheminé lors du traitement d'une demande antérieure relative à ce segment de données en association avec un identifiant de flot.

Les moyens de mémorisation 114 sont par exemple une zone mémoire, une zone tampon (ou « buffer ») ou bien encore un disque dur externe.

Un tel dispositif d'acheminement peut être un routeur du réseau, une passerelle d'accès au réseau, un équipement multiplexeur d'accès.

Tel que représenté sur la figure 1, l'entité cliente 10 est reliée au dispositif d'acheminement 20. L'entité cliente 11 est reliée au dispositif d'acheminement 21. Les dispositifs d'acheminement 20 et 21 sont reliés au dispositif d'acheminement 24. Le dispositif d'acheminement 22 est relié au dispositif d'acheminement 25. Les dispositifs d'acheminement 24 et 25 sont reliés au dispositif d'acheminement 27. L'entité cliente 12 est reliée au dispositif d'acheminement 23, qui est lui-même relié au dispositif d'acheminement 26, relié au dispositif d'acheminement 28. Les dispositifs d'acheminement 27 et 28 sont reliés au serveur 30. On souligne ici qu'il s'agit d'un exemple illustratif et qu'aucune limitation n'est attachée à cette représentation.

Nous allons maintenant décrire le procédé de communication, tel qu'il est mis en oeuvre par le dispositif d'acheminement 24 dans un premier mode particulier de réalisation, en relation avec les figures 2a et 2b.

On se place dans le cas particulier où l'entité cliente 10 souhaite obtenir un segment de données d'un flot. L'entité cliente 10 transmet une demande IntP, pour « Interest Packet », relative à ce segment de données. Le mécanisme de propagation de cette demande dans le réseau de communication 1 est défini par la suite.

La figure 2a décrit les étapes du procédé de communication qui sont mises en oeuvre par le dispositif d'acheminement 24 pour traiter une demande D relative à un segment de données.

Dans une étape E1, le dispositif d'acheminement 24 reçoit cette demande D.

Dans une étape E2, le dispositif d'acheminement 24 détermine s'il dispose du segment de données demandé dans son magasin de contenus 114.

Si tel est le cas, dans une étape E3, le segment de données est acheminé vers l'interface par l'intermédiaire de laquelle la demande D a été reçue.

Dans le cas contraire, c'est-à-dire que le segment de données recherché n'est pas mémorisé dans le magasin de contenus 114, dans une étape E4, le dispositif d'acheminement 24 utilise alors la table des demandes pendantes 112 pour vérifier s'il a déjà transmis une demande d'une autre entité cliente relative à ce même segment de données.

Si tel est le cas, dans une étape E5, le dispositif d'acheminement 24 ajoute dans la table des demandes pendantes un identifiant de l'interface par l'intermédiaire de laquelle il a reçu la demande, en association avec un identifiant du segment de données recherché. Le dispositif d'acheminement 24 repasse ensuite en attente de réception d'une demande ou d'un segment de données.

S'il n'a pas encore transmis de demande relative à ce segment de données, dans une étape E6, le dispositif d'acheminement 24 mémorise dans la table des demandes pendantes 112 l'identifiant du segment de données en association avec un identifiant de l'interface par l'intermédiaire de laquelle il a reçu la demande. Une telle demande D relative à un segment de données est dite à acheminer par le dispositif d'acheminement 24, c'est-à-dire qu'aucune demande relative à ce segment de données n'a été transmise en sortie du dispositif et n'est en attente de réponse.

Dans une étape E7, le dispositif d'acheminement 24 détermine un identifiant de flot à partir de l'identifiant du segment de données.

Dans une étape E8, le dispositif d'acheminement 24 détermine si ce segment de données ou un autre segment de données de ce flot a été acheminé lors du traitement d'une demande antérieure relative à ce segment de données ou à cet autre segment de données et le cas échéant, obtient un ou des identifiants d'interface par l'intermédiaire desquelles cet acheminement a été effectué. Il s'agit ainsi d'interface par l'intermédiaire de laquelle une demande relative à ce segment de données ou à un autre segment de données de ce même flot a été reçue et par l'intermédiaire de laquelle le segment de données ou l'autre segment de données a été transmis. Plus précisément, le dispositif d'acheminement 24 effectue cette détermination à partir de la table d'acheminement par flot 116. Si un tel acheminement a été effectué, la table d'acheminement par flot 116 comprend alors un ou des identifiants d'interface en association avec un identifiant du flot.

Lorsque la table d'acheminement par flot 116 comprend un identifiant du flot, dans une étape d'acheminement E9, le dispositif d'acheminement 24 achemine la demande D vers la ou les interfaces obtenues. On constate ainsi que la demande D est acheminée vers d'autres dispositifs d'acheminement susceptibles de disposer du segment de données recherché dans leur propre magasin de contenus. En effet, chaque dispositif d'acheminement met en oeuvre ses propres règles de gestion de son magasin de contenus. Il peut par exemple mettre en oeuvre une règle de suppression des contenus les moins demandés des contenus les plus anciens, ou bien encore des contenus sélectionnés aléatoirement. Ainsi, à chaque niveau dans le réseau, les magasins de contenus vont mémoriser des segments de données différents. Acheminer la demande D vers une interface permettant de joindre un autre dispositif ayant demandé précédemment au dispositif d'acheminement 24 un segment de données du même flot et l'ayant reçu de ce dernier permet ainsi d'utiliser les informations mémorisées dans le magasin de contenus de cet autre dispositif. On rappelle ici que dans les méthodes connues de l'état de la technique, la demande D est uniquement acheminée vers une interface découverte par un protocole de routage et mémorisée dans une table d'acheminement FIB.

A l'issue de cette étape E9 et également lorsque la table d'acheminement par flot 116 ne comprend pas l'identifiant du flot, le procédé de communication repasse à une étape d'attente de réception d'une demande ou d'un segment de données.

Parallèlement aux étapes E8 et E9, dans une étape E10, le dispositif d'acheminement 24 détermine un identifiant d'une autre interface par l'intermédiaire de laquelle ce segment de données ou au moins un autre segment de données d'un flot du même domaine a été reçu. Plus précisément, le dispositif d'acheminement détermine une information relative à un nom de domaine à partir de l'identifiant du segment de données et obtient un ou des identifiants d'interface à partir de cette information relative au nom de domaine. Dans le mode de réalisation décrit, le dispositif d'acheminement 24 obtient ce ou ces identifiants d'interface à partir de la première table d'acheminement par domaine 110.

Dans une étape E11, le dispositif d'acheminement 24 achemine la demande par l'intermédiaire de cette ou ces autres interfaces vers un ou des dispositifs d'acheminement.

Le dispositif d'acheminement 24 repasse ensuite en attente de réception d'une demande ou d'un segment de données.

A l'issue de ces étapes E7 à E11, le traitement de la demande D à acheminer est terminé, la demande à acheminer ayant été transmise vers une ou des interfaces de sortie vers des dispositifs d'acheminement ayant demandé précédemment au dispositif d'acheminement 24 au moins un segment de données du flot et l'ayant reçu de ce dernier et vers des dispositifs d'acheminement ayant transmis précédemment au moins un segment de données du même domaine en réponse à une demande.

La figure 2b décrit, quant à elle, les étapes du procédé de communication qui sont mises en oeuvre pour traiter un segment de données reçu par l'intermédiaire d'une interface.

Dans une étape F1, le dispositif d'acheminement 24 reçoit le segment de données.

Dans une étape F2, le dispositif d'acheminement 24 détermine à l'aide de la table des demandes pendantes 112 un ou des identifiants d'interface vers lesquelles le segment de données doit être acheminé. Le segment de données peut également être mémorisé dans le magasin de contenus 114.

Dans une étape F3, le dispositif d'acheminement 24 envoie le segment de données par l'intermédiaire de la ou des interfaces déterminées.

Dans une étape F4, le dispositif d'acheminement 24 détermine un identifiant du flot à partir de l'identifiant du segment de données reçu.

Dans une étape F5, le dispositif d'acheminement 24 mémorise dans la table d'acheminement par flot 116 la ou les interfaces par l'intermédiaire desquelles le segment de données a été acheminé en association avec l'identifiant de flot déterminé.

Lorsque le segment de données a été reçu par l'intermédiaire d'une interface déterminée à l'aide de la première table d'acheminement par domaine 110, dans une étape F6, le dispositif d'acheminement 24 détermine une information relative à un nom de domaine à partir de l'identifiant du segment de données reçu. Dans une étape F7, le dispositif d'acheminement 24 mémorise dans la première table d'acheminement par domaine 110 l'interface par l'intermédiaire de laquelle a été reçu le segment de données en association avec l'information relative à un nom de domaine. Lorsque la première table comprend déjà une interface associée à cette information relative au nom de domaine, cette association est mise à jour par ajout de l'interface.

Le dispositif d'acheminement 24 repasse ensuite en attente de réception d'une demande ou d'un segment de données.

Les étapes F2 à F7 correspondent au traitement d'un segment de données reçu.

A l'initialisation du procédé, la première table d'acheminement par domaine 110 contient des informations d'acheminement par défaut, définies par exemple par un opérateur du réseau de communication. Ces informations d'acheminement sont très générales. On constate que la première table d'acheminement par domaine 110 est enrichie au cours de l'exécution du procédé de communication en mémorisant les interfaces par l'intermédiaire desquelles des segments de données de flots rattachés au même domaine sont reçus. Ceci permet d'envoyer une demande à acheminer vers une ou des interfaces par l'intermédiaire desquelles un segment de données d'un flot du même domaine a été reçu et de ne pas solliciter les autres dispositifs. Ceci permet également de ne pas nécessiter de mécanismes de diffusion dans le réseau de communication, permettant de publier des chemins vers un dispositif disposant d'un flot.

La deuxième table d'acheminement par flot 116 est enrichie également au cours de l'exécution du procédé de communication et permet de solliciter des dispositifs d'acheminement plus proches dans la topologie du réseau de communication. Ces dispositifs d'acheminement ont précédemment transmis au dispositif considéré une demande relative à un segment de données du flot et l'ont reçu de ce dernier. Cette deuxième table d'acheminement par flot comprend des informations plus précises que la première table d'acheminement puisque les identifiants de flot y sont mémorisés. La mise en oeuvre en parallèle des deux étapes d'acheminement E9 et E11 permet en outre de diminuer le temps nécessaire à la réception du segment de données.

Dans le mode de réalisation décrit précédemment, les étapes d'acheminement E9 et E11 sont effectuées en parallèle. Dans un deuxième mode de réalisation, l'étape d'acheminement E11 est effectuée lorsqu'aucun segment de données n'a été reçu en réponse à l'étape d'acheminement E9. Dans une étape consécutive à l'étape d'acheminement E9, le dispositif d'acheminement 24 est en attente de réception du segment de données recherché. Lorsque le segment de données est reçu, le procédé de communication passe ensuite à un traitement de ce segment de données, décrit précédemment. La réception du segment de données est par exemple supervisée à l'aide d'une temporisation. En l'absence de réception du segment de données, le dispositif d'acheminement 24 met alors en oeuvre l'étape E10 et détermine un identifiant d'une autre interface par l'intermédiaire de laquelle au moins un autre segment de données d'un flot du même domaine a été reçu. Le dispositif d'acheminement 24 met alors en oeuvre l'étape d'acheminement E11 et achemine la demande par l'intermédiaire de cette ou ces autres interfaces vers un ou des dispositifs ayant précédemment transmis au moins un segment de données d'un flot du même domaine. Les avantages mentionnés précédemment pour le premier mode de réalisation en relation avec les première et deuxième tables d'acheminement sont également obtenus. La charge du réseau est diminuée dans ce deuxième mode de réalisation.

Dans un troisième mode de réalisation, seule la première table d'acheminement par domaine est prévue. Le procédé de communication ne comprend alors pas les étapes E7, E8 et E9, et les étapes F4 et F5. Les avantages mentionnés précédemment pour le premier mode de réalisation en relation à cette table d'acheminement par domaine sont également obtenus.

Dans un quatrième mode de réalisation, une table d'acheminement FIB, connue de l'état de la technique, et la deuxième table d'acheminement par flot 116 sont prévues. Une telle table d'acheminement FIB comprend des données d'acheminement obtenues par un protocole de routage. L'étape E10 est alors remplacée par une étape de détermination d'une ou de plusieurs interfaces de sortie à partir de la table d'acheminement FIB. Les avantages mentionnés précédemment pour le premier mode de réalisation en relation à la table d'acheminement par flot sont également obtenus

A titre illustratif, les tables d'acheminement 110, 116 et la table des demandes pendantes 112 sont représentées sur les figures 3a-3f. Dans cet exemple, le réseau est organisé sous la forme d'un arbre et le dispositif d'acheminement considéré comprend trois interfaces vers des dispositifs en aval dans l'arborescence, d'identifiants 10, 11, 12, et deux interfaces vers des dispositifs en amont dans l'arborescence, d'identifiants 01, 02.

A l'initialisation, telle que représentée à la figure 3e, la première table d'acheminement par domaine 110 ou DNT comprend une règle d'acheminement par défaut. Cette dernière indique que toute demande relative à un segment de données et à acheminer est transmise par l'intermédiaire des deux interfaces vers des dispositifs en amont, c'est-à-dire vers les interfaces 01, 02.

La deuxième table d'acheminement par flot 116 ou DIFT représentée à la figure 3c est vide. Des première et deuxième demandes relatives au segment de données d'identifiant "/youtube.com/stream/news/../video1/version1/segment1" ont été reçues (étape E1) et mémorisées (étapes E6 -pour la première demande- et étape E5 -pour la deuxième demande-) dans la table des demandes pendantes 112 ou PIT, représentée à la figure 3a. La première demande est acheminée (étape E11) vers les interfaces en amont 01, 02 en utilisant la règle d'acheminement par défaut mémorisée dans la première table d'acheminement par domaine 110.

Ultérieurement, le segment de données recherché est reçu (étape F1) par l'intermédiaire de l'interface 02. A l'aide des informations mémorisées dans la table des demandes pendantes 112 (étape F2), le segment de données reçu est retransmis (étape F3) par l'intermédiaire des interfaces 10, 11. L'identifiant du flot "/youtube.com/stream/news/../video1/version1" est mémorisé dans la deuxième table d'acheminement par flot DIFT (étape F5) en association avec les interfaces 10, 11, telle que représentée à la figure 3d. L'information relative à un nom de domaine "/youtube.com/" est mémorisée dans la première table d'acheminement par domaine DNT (étape F7) en association avec l'interface 02, telle que représentée à la figure 3f.

Une troisième demande relative à ce même segment de données est reçue par l'intermédiaire de l'interface 12. On se place dans le cas particulier où le dispositif considéré ne dispose plus du segment de données dans son magasin de contenus 114. Cette troisième demande est mémorisée (étape E6) dans la table des demandes pendantes, telle que représentée à la figure 3b. L'identifiant du flot étant mémorisé (étape E8) en association avec les interfaces 10, 11 dans la deuxième table d'acheminement par flot DIFT (figure 3d), la troisième demande est transmise (étape E9) par l'intermédiaire des deux interfaces 10, 11 à destination des dispositifs en aval. Le segment de données est susceptible d'être mémorisé dans les magasins de contenus de ces dispositifs en aval, car ils ont demandé précédemment le segment de données au dispositif considéré et l'ont reçu de ce dernier. La troisième demande est également transmise (étape E11) par l'intermédiaire de l'interface 02 déterminée grâce à la première table d'acheminement par domaine DNT (étape E10 ; figure 3f) vers un dispositif en amont. Pour une quatrième demande relative à un autre segment de données de ce même flot, le fonctionnement est identique.

Cet exemple simple illustre le fonctionnement du procédé de communication, notamment la manière dont se remplissent les tables d'acheminement. On constate ainsi que la première table d'acheminement par domaine DNT se remplit par analyse des segments de données reçus en réponse à des demandes et que la deuxième table d'acheminement par flot DIFT est remplie en fonction des transmissions antérieures de segments de données vers des dispositifs ayant transmis des demandes relatives à des segments de données du même flot. Cette dernière permet ainsi d'améliorer la recherche d'un segment de données en sollicitant d'autres dispositifs que ceux permettant de joindre l'équipement mettant à disposition le flot.

Par ailleurs, des mécanismes sont également mis en oeuvre afin de supprimer des première et deuxième tables d'acheminement des données obsolètes. A titre d'exemple, il est possible de supprimer de manière aléatoire les informations mémorisées dans ces tables d'acheminement. Toujours à titre d'exemple, il est associé à chaque interface mémorisée une durée de validité, réinitialisée lors du traitement d'un segment de données reçu par l'intermédiaire de cette interface.

Nous allons maintenant décrire un dispositif d'acheminement dans un mode particulier de réalisation de l'invention en référence à la figure 4. Un tel dispositif 20 est agencé pour traiter des segments de données appartenant à différents flots et comprend :
- la première table d'acheminement par domaine 110 DNT décrite précédemment ;
- la table des demandes pendantes 112 PIT décrite précédemment ;
- les moyens de mémorisation 114 ou magasin de contenus décrit précédemment ;
- la deuxième table d'acheminement par flot 116 DIFT décrite précédemment ;
- un module de communication 100 avec les autres dispositifs du réseau de communication, agencé pour émettre et recevoir des données, notamment des demandes relatives à des segments de données appartenant à un flot et des segments de données ;
- un module 102 de traitement de demandes relatives à des segments de données en relation avec la table des demandes pendantes 112, agencé notamment pour déterminer si une demande relative à un segment de données est déjà pendante et le cas échéant mettre à jour la table des demandes pendantes et pour acheminer une demande grâce à des données d'acheminement ;
- un module 104 de traitement de segments de données, agencé pour transmettre les segments de données à destination des entités clientes les ayant demandés grâce à la table des demandes pendantes 112 et par l'intermédiaire d'autres dispositifs d'acheminement.

Le module 102 est notamment agencé pour déterminer un identifiant du flot à partir de l'identifiant du segment de données recherché et pour obtenir de la deuxième table d'acheminement par flot 116 au moins un identifiant d'une interface par l'intermédiaire de laquelle au moins un autre segment de données de ce flot a été acheminé lors du traitement d'une demande antérieure relative à cet autre segment de données.

Le module 102 est également agencé pour déterminer une information relative à un nom de domaine à partir de l'identifiant du segment de données recherché et pour obtenir de la première table d'acheminement par domaine 110 au moins un identifiant d'une interface par l'intermédiaire de laquelle au moins un autre segment de données d'un flot de ce domaine a été reçu.

Le module 104 est notamment agencé pour mémoriser dans la première table d'acheminement par domaine 110 au moins une interface par l'intermédiaire de laquelle un segment de données a été reçu en association avec une information relative à un nom de domaine pour ce segment de données et pour mémoriser dans la deuxième table d'acheminement par flot 116 au moins un identifiant d'une interface par l'intermédiaire de laquelle le segment de données a été transmis en association avec un identifiant du flot auquel appartient ce segment de données.

Dans un mode de réalisation particulier, le dispositif d'acheminement 20 ne comprend qu'une seule table d'acheminement, la première table d'acheminement par domaine 110. Dans ce mode de réalisation, le module 102 est agencé pour déterminer une information relative à un nom de domaine à partir de l'identifiant du segment de données recherché et pour obtenir de la première table d'acheminement par domaine 110 au moins un identifiant d'une interface par l'intermédiaire de laquelle au moins un autre segment de données d'un flot de ce domaine a été reçu. Le module 104 est alors agencé pour mémoriser dans la première table d'acheminement par domaine 110 au moins une interface par l'intermédiaire de laquelle un segment de données a été reçu en association avec une information relative à un nom de domaine pour ce segment de données.

Dans un mode de réalisation particulier, le dispositif d'acheminement 20 comprend une table d'acheminement FIB, connue de l'état de la technique, et la deuxième table d'acheminement par flot 116. Une telle table d'acheminement FIB comprend des données d'acheminement obtenues par un protocole de routage. Dans ce mode de réalisation, le module 102 est notamment agencé pour déterminer un identifiant du flot à partir de l'identifiant du segment de données recherché et pour obtenir de la deuxième table d'acheminement par flot 116 au moins un identifiant d'une interface par l'intermédiaire de laquelle au moins un autre segment de données de ce flot a été acheminé lors du traitement d'une demande antérieure relative à cet autre segment de données. Le module 102 est également agencé pour obtenir de la table d'acheminement FIB au moins un identifiant d'une interface par l'intermédiaire de laquelle la demande relative à un segment de données doit être retransmise. Le module 104 est notamment agencé pour mémoriser dans la deuxième table d'acheminement par flot 116 au moins un identifiant d'une interface par l'intermédiaire de laquelle le segment de données a été transmis en association avec un identifiant du flot auquel appartient ce segment de données.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 102, 104 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif d'acheminement. L'invention concerne donc aussi :
- un programme pour un dispositif d'acheminement, comprenant des instructions de code de programme destinées à commander l'exécution des étapes du procédé précédemment décrit, lorsque ledit programme est exécuté par ledit dispositif ;
- un support d'enregistrement lisible par un dispositif d'acheminement sur lequel est enregistré le programme pour un dispositif d'acheminement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un réseau de communication comprenant au moins un dispositif d'acheminement tel que décrit précédemment.

## Revendications

1. Procédé de communication mis en oeuvre par un dispositif (20-28) d'acheminement dans un réseau de communication (1) mettant en oeuvre un acheminement par nom, ledit procédé comprenant les étapes suivantes mises en oeuvre pour traiter une demande relative à un segment de données d'un flot donné, ladite demande étant à acheminer par l'intermédiaire d'une interface du dispositif d'acheminement :
- une étape de mémorisation (F5) d'au moins un identifiant d'une interface par l'intermédiaire de laquelle au moins un autre segment de données dudit flot donné a été acheminé, ladite étape de mémorisation étant mise en oeuvre préalablement au traitement de ladite demande, lors de l'acheminement dudit autre segment de données ;
- une première étape d'obtention (E8) de l'au moins un identifiant d'une interface mémorisé ;
- une première étape d'acheminement (E9) de ladite demande par l'intermédiaire de ladite au moins une interface obtenue.

2. Procédé de communication selon la revendication 1, dans lequel, un flot étant rattaché à un domaine, ledit procédé comprend une deuxième étape d'obtention (E10) d'un identifiant d'une autre interface par l'intermédiaire de laquelle au moins un autre segment de données d'un flot rattaché audit domaine a été reçu et une deuxième étape d'acheminement (E11) de la demande par l'intermédiaire de ladite autre interface.

3. Procédé de communication selon la revendication 1, dans lequel les deuxièmes étapes d'obtention et d'acheminement sont exécutées parallèlement aux premières étapes d'obtention et d'acheminement.

4. Procédé de communication selon la revendication 1, dans lequel les deuxièmes étapes d'obtention et d'acheminement sont exécutées lorsque le segment de données n'a pas été reçu en réponse à la première étape d'acheminement.

5. Procédé de communication selon la revendication 1, dans lequel l'interface par l'intermédiaire de laquelle le segment de données a été acheminé est mémorisée (F5) en association avec un identifiant dudit flot.

6. Procédé de communication selon la revendication 2, dans lequel, un identifiant du segment de données comprenant une information relative à un nom de domaine, l'interface par l'intermédiaire de laquelle est reçu le segment de données est mémorisée (F7) en association avec l'information relative à un nom de domaine.

7. Dispositif (20-28) d'acheminement dans un réseau de communication mettant en oeuvre un acheminement par nom, comprenant les moyens suivants, activés pour traiter une demande relative à un segment de données d'un flot donné, ladite demande étant à acheminer sur un lien du dispositif d'acheminement :
- une table d'acheminement par flot (116), agencée pour mémoriser au moins un identifiant d'une interface par l'intermédiaire de laquelle un autre segment de données du flot a été acheminé lors du traitement d'une demande antérieure relative audit autre segment de données en association avec un identifiant du flot, la mémorisation étant mise en oeuvre préalablement au traitement de ladite demande, lors de l'acheminement dudit autre segment de données ;
- un module d'obtention (102) dudit au moins un identifiant d'une interface;
- un module d'acheminement (100) de ladite demande par l'intermédiaire de ladite au moins une interface obtenue.

8. Dispositif d'acheminement selon la revendication 7, comprenant en outre un module d'obtention (104) d'un identifiant d'une autre interface, un flot étant rattaché à un domaine, au moins un autre segment de données d'un flot rattaché audit domaine ayant été reçu par l'intermédiaire de ladite autre interface.

9. Réseau de communication comprenant au moins un dispositif d'acheminement selon la revendication 7.

10. Programme pour un dispositif d'acheminement, comprenant des instructions de code de programme destinées à commander l'exécution des étapes du procédé selon l'une des revendications 1 à 6, lorsque ledit programme est exécuté par ledit dispositif.

11. Support d'enregistrement lisible par un dispositif d'acheminement sur lequel est enregistré le programme selon la revendication 10.

## Patentansprüche

1. Kommunikationsverfahren, welches von einer Routing-Vorrichtung (20-28) in einem Kommunikationsnetz (1) durchgeführt wird, das ein Routing durch Namen verwendet, wobei das Verfahren die folgenden Schritte umfasst, die durchgeführt werden, um eine Anforderung in Bezug auf ein Datensegment eines Datenstroms zu behandeln, wobei die Anforderung mittels einer Schnittstelle der Routing-Vorrichtung zu routen ist:
- einen Schritt des Speicherns (F5) mindestens eines Identifikators einer Schnittstelle, mittels welcher mindestens ein anderes Datensegment des Datenstroms geroutet wurde, wobei der Schritt des Speicherns, vor der Behandlung der Anforderung, beim Routing des anderen Datensegments durchgeführt wird;
- einen ersten Schritt des Erhaltens (E8) des mindestens einen gespeicherten Identifikators einer Schnittstelle;
- einen ersten Schritt des Routings (E9) der Anforderung mittels der mindestens einen erhaltenen Schnittstelle.

2. Kommunikationsverfahren nach Anspruch 1,
wobei, wenn ein Strom einer Domäne zugeordnet wird, das Verfahren einen zweiten Schritt des Erhaltens (E10) eines Identifikators einer anderen Schnittstelle, mittels welcher mindestens ein anderes Datensegment eines der Domäne zugeordneten Stroms empfangen wurde, und einen zweiten Schritt des Routings (E11) der Anforderung mittels der anderen Schnittstelle umfasst.

3. Kommunikationsverfahren nach Anspruch 1,
wobei die zweiten Schritte des Erhaltens und des Routens parallel zu den ersten Schritten des Erhaltens und des Routens ausgeführt werden.

4. Kommunikationsverfahren nach Anspruch 1,
wobei die zweiten Schritte des Erhaltens und des Routens ausgeführt werden, wenn das Datensegment ansprechend auf den ersten Routing-Schritt nicht empfangen wurde.

5. Kommunikationsverfahren nach Anspruch 1,
wobei die Schnittstelle, mittels welcher das Datensegment geroutet wurde, in Assoziation mit einem Identifikator des Stroms gespeichert wird (F5).

6. Kommunikationsverfahren nach Anspruch 2,
wobei, wenn ein Identifikator des Datensegments eine Information in Bezug auf einen Domänennamen umfasst, die Schnittstelle, mittels welcher das Datensegment empfangen wird, in Assoziation mit der Information in Bezug auf einen Domänennamen gespeichert wird (F7).

7. Routing-Vorrichtung (20-28) in einem Kommunikationsnetz, das ein Routing durch Namen verwendet, umfassend die folgenden Mittel, die aktiviert werden, um eine Anforderung in Bezug auf ein Datensegment eines Datenstroms zu behandeln, wobei die Anforderung auf einer Verbindung der Routing-Vorrichtung zu routen ist:
- eine Strom-Routing-Tabelle (116), die geeignet ist, mindestens einen Identifikator einer Schnittstelle, mittels welcher ein anderes Segment des Stroms bei der Behandlung einer vorherigen Anforderung in Bezug auf das andere Datensegment geroutet wurde, in Assoziation mit einem Identifikator des Stroms zu speichern, wobei das Speichern, vor der Behandlung der Anforderung, beim Routing des anderen Datensegments durchgeführt wird;
- ein Modul (102) zum Erhalten des mindestens einen Identifikators einer Schnittstelle;
- ein Modul (100) zum Routen der Anforderung mittels der mindestens einen erhaltenen Schnittstelle.

8. Routing-Vorrichtung nach Anspruch 7,
außerdem umfassend ein Modul (104) zum Erhalten eines Identifikators einer anderen Schnittstelle, wenn ein Strom einer Domäne zugeordnet wird, wobei mindestens ein anderes Datensegment eines Stroms, welcher der Domäne zugeordnet wird, mittels der anderen Schnittstelle empfangen wurde.

9. Kommunikationsnetz, umfassend mindestens eine Routing-Vorrichtung nach Anspruch 7.

10. Programm für eine Routing-Vorrichtung, umfassend Programmcodeinstruktionen, die dazu bestimmt sind, die Ausführung der Schritte des Verfahrens nach einem der Ansprüche 1 bis 6 zu steuern, wenn das Programm von der Vorrichtung ausgeführt wird.

11. Speichermedium, welches von einer Routing-Vorrichtung gelesen werden kann, und auf welchem das Programm nach Anspruch 10 gespeichert ist.

## Claims

1. Communication method implemented by a device (20-28) for forwarding in a communication network (1) implementing name-based forwarding, said method comprising the following steps implemented to process a request relating to a data segment of a given stream, said request having to be forwarded by way of an interface of the forwarding device:
- a step of storing (F5) at least one identifier of an interface
by way of which at least one other data segment of said given stream has been forwarded, said storage step being implemented, prior to the processing of said request, during the forwarding of said other data segment;
- a first step of obtaining (E8) the at least one identifier of a stored interface;
- a first step of forwarding (E9) said request by way of said at least one interface obtained.

2. Communication method according to Claim 1, in which, a stream being attached to a domain, said method comprises a second step of obtaining (E10) an identifier of another interface by way of which at least one other data segment of a stream attached to said domain has been received and a second step of forwarding (E11) the request by way of said other interface.

3. Communication method according to Claim 1, in which the second obtaining and forwarding steps are executed in parallel with the first obtaining and forwarding steps.

4. Communication method according to Claim 1, in which the second obtaining and forwarding steps are executed when the data segment has not been received in response to the first forwarding step.

5. Communication method according to Claim 1, in which the interface by way of which the data segment has been forwarded is stored (F5) in association with an identifier of said stream.

6. Communication method according to Claim 2, in which, an identifier of the data segment comprising an item of information relating to a domain name, the interface by way of which the data segment is received is stored (F7) in association with the item of information relating to a domain name.

7. Device (20-28) for forwarding in a communication network implementing name-based forwarding, comprising the following means, activated to process a request relating to a data segment of a given stream, said request having to be forwarded on a link of the forwarding device:
- a stream-based forwarding table (116), designed to store at least one identifier of an interface by way of which another data segment of the stream has been forwarded during the processing of an earlier request relating to said other data segment in association with an identifier of the stream, the storage being implemented, prior to the processing of said request, during the forwarding of said other data segment;
- a module (102) for obtaining said at least one identifier of an interface;
- a module (100) for forwarding said request by way of said at least one interface obtained.

8. Forwarding device according to Claim 7, furthermore comprising a module (104) for obtaining an identifier of another interface, a stream being attached to a domain, at least one other data segment of a stream attached to said domain having been received by way of said other interface.

9. Communication network comprising at least one forwarding device according to Claim 7.

10. Program for a forwarding device, comprising program code instructions intended to control the execution of the steps of the method according to one of Claims 1 to 6, when said program is executed by said device.

11. Recording medium that can be read by a forwarding device on which the program according to Claim 10 is recorded.
